# EUROPEAN PATENT SPECIFICATION

(11) **EP 0 677 974 B1**
(45) Date of publication and mention of the grant of the patent: **13.07.2005**
(21) Application number: 95302435.3
(22) Date of filing: 12.04.1995
(51) Int. Cl.: H04Q 7/32, H04M 1/72, G06F 1/32

(54) **Data buffering device between communicating processors in a cellular mobile telephone terminal**
Datenpuffervorrichtung zwischen Übertragungsprozessoren in einem zellularen Mobiltelefon
Dispositif tampon de données entre des processeurs de communication dans un poste téléphonique mobile cellulaire

(30) Priority: 12.04.1994 GB 9407232
(43) Date of publication of application: 18.10.1995
(60) Divisional application: 04021639.2
(73) Proprietor: Nokia Corporation, 02150 Espoo (FI)
(72) Inventor: Hejdeman, Carl, Basingstoke, Hampshire RG23 8HY (GB); Hooker, Guy Alexander, Camberley, Surrey GU15 2SP (GB)
(74) Representative: Haws, Helen Louise

(56) References cited:
- EP-A- 0 217 486
- WO-A-93/25955
- US-A- 5 487 181

## Description

The present invention relates to data processing apparatus having a data buffering device positionable between communicating processors, wherein at least one of said processors is battery powered and is arranged to be placed in a stand-by condition, thereby reducing power consumption when not required.

With the growing tendency of data processing equipment to become smaller and smaller, it is possible to provide portable machines with ever increasing levels of sophistication. In addition to conventional computer systems, often sold as "lap-tops" and "palm-tops", other equipment, traditionally portable by nature, is making increasing use of digital processing technology. Thus, the new generation of mobile cellular telephones employ digital coding for the transmission and reception of speech signals in addition to digital signal processing within the control environment.

Although the manipulation of signals within the digital domain provides many advantages, a disadvantage of such processing, when compared to analogue processing, is that there tends to be an increased power demand. Clearly, in portable systems, power is supplied from battery packs and any measures which can be invoked to reduce power demand will, for a given size of battery, increase operating time.

In data processing environments, particularly when powered from local power suppliers such as batteries, it is known to deactivate or de-energise processors when these processors are not actually required to perform a data processing function, thereby reducing demands on power consumption. However, as will be appreciated, care must be taken to ensure that, when required, a processor is re-activated, thereby ensuring that a processor does not remain in its "stand-by" state when required to perform a processing operation.

A problem of this nature arises when a first processor is required to communicate with a second processor. In a cellular mobile telephone, a first processor is provided to perform control functions and a second processor, which communicates with said first processor, is provided to perform data signal processing, particularly in connection with the processing of speech signals. Both of these processors draw significant amounts of power from the batteries, therefore it is desirable to place these processors into a "stand-by" state when they are not required to process information. However, it is also essential that these processors are not in their stand-by state when required to receive or transmit information from or to other processors.

Document WO 93 25955 refers to a data buffering device positionable between processors to provide a communicating means between said processors disclosing:
(i) data storage locations
(ii) a register indicating whether said data storage locations have data stored therein to be read out or whether said locations are available for data to be written thereto; and
(iii) interrupt generating means arranged to supply an interrupt signal to a receiving processor when said register is set to indicate that said locations contain data to be read by said receiving processor.

According to a first aspect of the present invention, there is provided a portable data processing apparatus comprising a first processor having an operational condition and a power-saving non-active condition; a second processor having an operational condition and a power-saving non-active condition; data storage locations mutually accessible to the processors and wherein the first and second processors are arranged to transfer data between the first processor and the second processor via the data storage locations; a register indicating whether said data storage locations have data stored therein to be read out or whether said locations are available for data to be written thereto; interrupt generating means arranged to send an interrupt signal, under the initiation of the second processor to the first processor to change the condition of the first processor from the power-saving condition to the operational condition when said register is set to indicate that said locations contain data to be read by said first processor, the interrupt generating means being further arranged to supply an interrupt signal under the initiation of the first processor to the second processor to change the condition of the second processor from the power-saving condition to the operational condition when said register is re-set to indicate that said locations have been read by the first processor; and wherein said first and second processors are arranged to enter their respective power-saving conditions when not required to communicate with one another to transfer data there-between and arranged to be respectively interrupted from said power-saving conditions on receiving an appropriate interrupt signal.

In a preferred embodiment, interrupt generating means are also provided to supply an interrupt signal to the transmitting processor when said register is re-set to indicate that new data may be written to said locations.

Preferably, a first set of storage locations are provided for transferring data from a first processor to a second processor and a second set of storage locations are provided to effect transfer from said second processor to said first processor.

According to a second aspect of the present invention, there is provided a method of conserving power in a data processing apparatus comprising transmitting data between a first processor and a second processor via a data buffer and selectively switching on/off to a non-active standby condition the first processor and second processor to save power when not required to communicate with one another to transfer data there-between, the method further comprising interrupting, under the initiation of the second processor, the first processor to change the condition of the first processor from the power-saving condition to a operational condition when the data buffer contains data to be read by the said first processor; and interrupting the second processor, under the initiation of the first processor, from the power-saving condition to a operational condition when the data buffer data has been read and wherein the condition of the second/first processor is changed from respective operational conditions to respective power-saving conditions respective first/second processors are not required to communicate with one another to transfer data therebetween.

Subsidiary features of the present invention are given in the appended claims.

The invention will now be described by way of example only, with reference to the accompanying drawings in which;
Figure 1 shows a mobile telephone having an output loud speaker, an input microphone, a menu display and a battery pack;
Figure 2 is a schematic representation of the telephone shown in Figure 1, including a digital signal processing subsystem, a micro controlling unit subsystem and a dedicated integrated circuit facilitating the transfer of data from between said subsystems;
Figure 3 details the dedicated integrated circuit shown in Figure 2, including random access memory devices and control circuits; and
Figure 4 details a control circuit of the type shown in Figure 3.

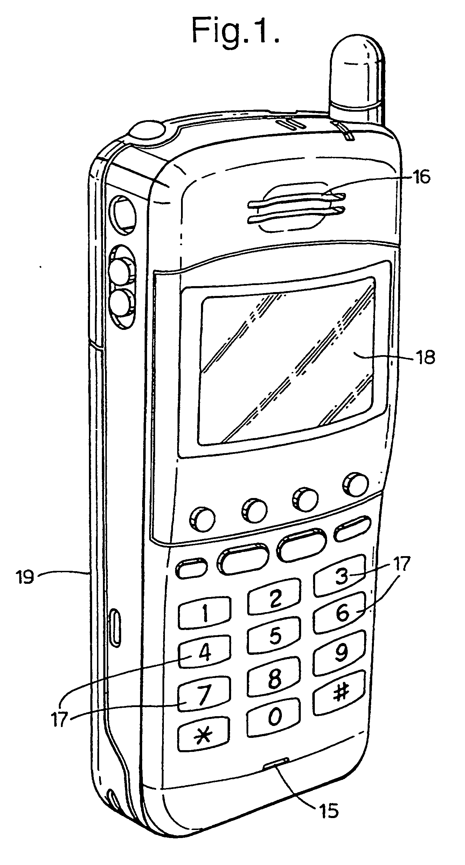

A mobile telephone is shown in Figure 1, having a mouthpiece microphone 15 and an earpiece loudspeaker 16. Conventional signalling buttons 17 are provided, enabling telephone numbers to be dialled and supplementary telephony services to be effected using the star and square buttons. A liquid crystal display 18 also provides a visual display to an operator which, in addition to facilitating conventional telephony operations, also assist the operator in the selection of other operating characteristics.

In operation, the telephone shown in Figure 1 performs a significant degree of data processing, in order to facilitate communication with base stations using digital coding techniques.

All of the processing performed by the telephone shown in Figure 1 is powered by means of a local battery pack 19, which would normally be provided with sufficient energy to power the telephone in a fully operational way for several hours, between re-charges.

As will be appreciated, the conversion of analogue speech signals into a digitally encoded signals along with the reverse process when receiving signals, requires a considerable processing overhead. Processing of the speech signals is effected using a dedicated digital signal processor within the telephone housing shown in Figure 1. Similarly, a significant degree of control and signalling is required and again a dedicated microcomputer control unit is provided to facilitate the control functions within the telephone. Thus, to a large extent, each of these processing domains remain separate, each being allocated specific tasks within the communicating environment. However, it is also necessary, on occasions, for the microcomputer control unit to communicate with the digital signal processor.

In practice, the digital signal processor will tend to operate at a much faster rate than the microcomputer control unit, allowing power savings to be made by effectively placing said control unit in a stand-by condition, awaiting data to be processed by the digital signal processor before commencing its next task. However, a problem arises in that, once placed in its stand-by condition, action must be taken to ensure that it is placed in its active condition prior to effecting a data transfer with the digital signal processor. Furthermore, it would be undesirable to burden the digital signal processor with the additional task of ensuring that the microcomputer control unit is in a suitable condition for communicating, prior to that communication taking place.

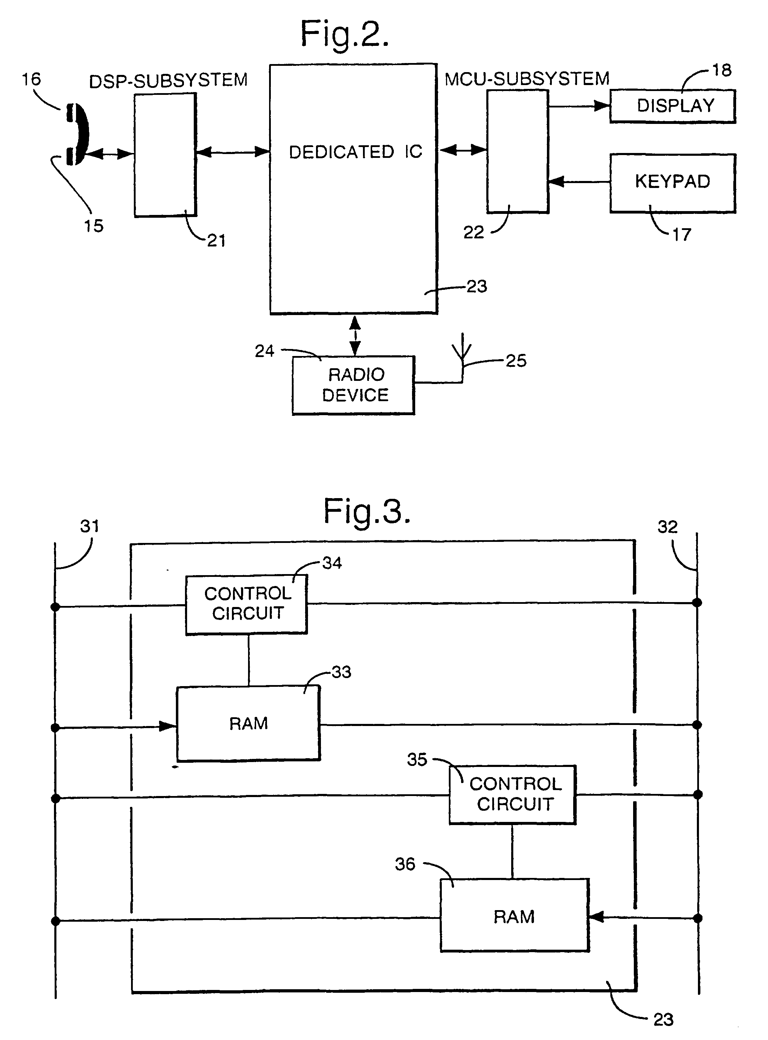

A schematic representation of the telephone shown in Figure 1 is presented in Figure 2. Mouthpiece 15 and earpiece 16 communicate with a digital processing subsystem 21. Subsystem 21 includes a conventional digital signal processor, such as a DSP1616 supplied by AT&T.

Signals generated in response to the depression of key 17, result in signals being supplied to a micro control unit subsystem 22, including a conventional microprocessor such as an H8/536 applied by Hitachi. In addition, the micro controller unit subsystem is also arranged to supply signals to display device 18. Additional facilities are provided by a purpose-built dedicated integrated circuit 23, including circuitry for effecting transfers of data between the data signal processing subsystem 21 and the micro control unit subsystem 22.

The integrated circuit 23 also provides an interface to a radio device 24, arranged to modulate signals for transmission to an antenna 25 and to demodulate signals received from the antenna.

Part of the dedicated integrated circuit 23, for effecting the transfer of data between the DSP subsystem 21 and the MCU subsystem 22, is detailed in Figure 3. The integrated circuit 23 is connected to the bus lines 31 of the DSP subsystem 21 and connected to the bus lines 32 of the micro control unit subsystem 22. In order to effect the transfer of data from the DSP subsystem to the MCU subsystem, data is written to storage locations in the form of a random access memory device 33, under the control of a control circuit 34. After the data has been written to the device 33, it may then be read by the MCU subsystem 22, again under the control of the control circuit 34.

A similar arrangement is provided to effect transfer from the MCU subsystem 22 to the DSP subsystem 21. Thus, under the control of a control circuit 35, data is written to storage locations 36 whereafter, again under the control of the control circuit 35, data is read from the storage locations 36 to the DSP subsystem 21, by its respective bus lines 31.

Transmissions between the DSP 21 and the MCU 22 occur in blocks of 68 8-bit bytes and transmission tends to occur every 10 milliseconds. Notwithstanding requirements to perform other processing functions, devices 21 and 22 are placed in non-active stand-by condition when not required to communicate with each other, thereby conserving battery power.

Thus, the dedicated integrated circuit 23 effectively provides a buffering device which is positioned between a first processor 21 and a second processor 22. A buffering device includes data storage locations in the form of memory device 33 for data transfers from the first processor to the second processor and memory device 36 for transfers from the second processor to the first processor. Transfers are effected under the control of control circuit 34. Control circuit 34 includes a register which indicates whether its respective data storage locations have data stored therein to be read out and supplied to the second processor 22. Alternatively, the register indicates whether said locations are available for data to be written thereto from the first processor 21. In addition, the control circuit 34 also includes means for generating interrupt signals arranged to supply an interrupt signal to the receiving second processor 22 when the register has been set to indicate that storage locations contain data which is to be read by the receiving processor. Furthermore, the control circuit 34 also includes interrupt generating means arranged to generate an interrupt signal to the transmitting processor 21 when the register has been re-set to indicate that the storage locations are available for data to be written thereto.

The buffer may be referred to as a mailbox because it allows either processor to remain in a stand-by condition or "sleep mode" while the other is writing data to or reading data therefrom. When data has been read from the mailbox, an interrupt signal is supplied to the transmitting processor, effectively instructing the processor to transmit its next message. Similarly, when data has been written to the mailbox, the receiving processor is interrupted, thereby instructing it to the effect that a complete message is present which is waiting to be read.

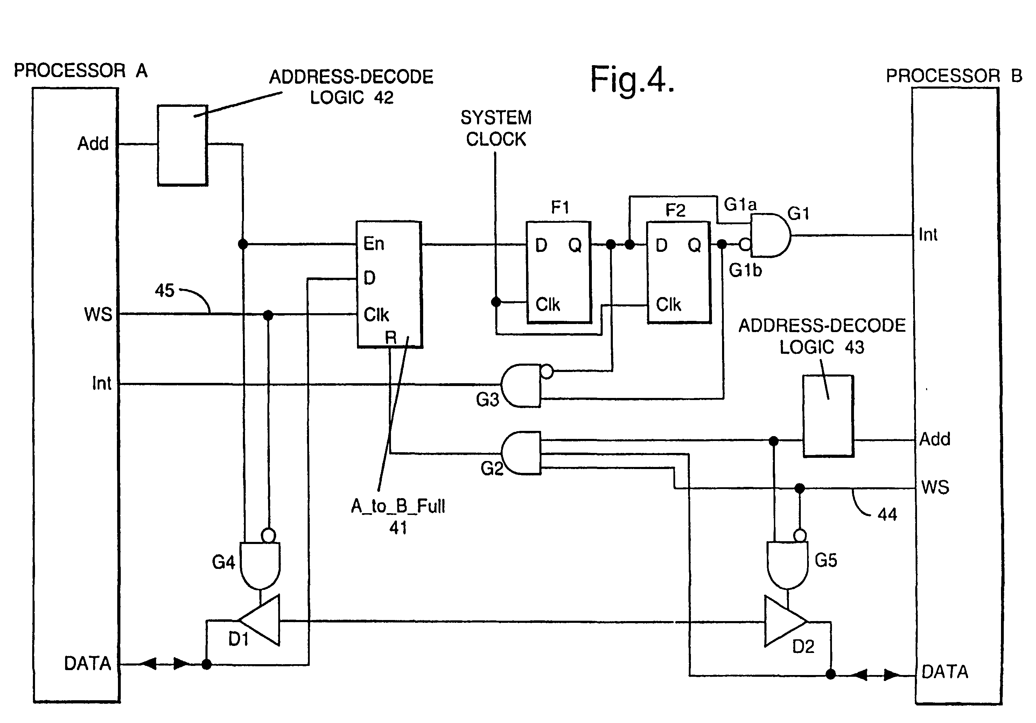

A control circuit, such as control circuit 34 or control circuit 35 is detailed in Figure 4. The control circuit includes a register 41 referred to as the A to B full register, which is set when its respective storage locations are full with data which has been received from the transmitting processor. Thus, when the device shown in Figure 4 represents control circuit 34, the DSP subsystem 21 becomes processor A and the MCU subsystem 22 becomes processor B. Similarly, when representing control circuit 35, these roles are reversed, such that processor A is the MCU subsystem 22 and processor B is the DSP subsystem 21.

The circuitry shown in Figure 4 is arranged to transfer data from processor A to processor B. Processor A is capable of addressing the A to B full register 41 by issuing a specified address on its address bus, which is interpreted by address decoding logic 42. In response to the specific address being supplied to the address decoding logic 42 and provided that the signal on WS line 44 is set low ("0"), the data bit level stored in the register 41 is supplied to the data line of processor A, thereby informing processor A that the buffer is full, register set to logic 1, or that buffer is empty, register 41 set to logic 0.

If a logic level 0 is returned to processor A on interrogation of the register 41, processor A sets the register by writing a logic 1 to it.

The value written to the register 41 by processor A is resynchronised to the system clock of the integrated circuit 23 by 2 flip flops F1 and F2 in association with gate G1. Thus, gate G1 provides a logic level 1 output when a first non-inverting input is at logic level 1 and the second inverting input is at logic level 0. Under this condition, gate G1 produces a pulse which is high for one system clock cycle, shortly after register 41 has been set.

The pulse generated by gate G1 provides an interrupt to processor B. Processor B may have been placed in its sleep condition, so as to save power. Thus, processor B is arranged such that on receiving an interrupt signal it is interrupted from its sleep condition and arranged to call a sub-routine, which in turn effects the reading of data from the storage locations.

Once data has been read from the storage locations, processor B resets the A to B full register 41, by issuing a specific address which is decoded by address decoding logic 43. In response to logic circuit 43 being addressed and provided that the signal on WS line 45 is set high ("1"), gate G2 generates a re-set pulse which asynchronously re-sets register 41. This again causes the logic level stored within the register 41, in this case logic level 0, to propagate through flip flops F1 and F2. Consequently, gate 3 will produce a pulse which is high for one system clock cycle. This pulse interrupts processor A, which itself may have been placed into its sleep mode while waiting for processor B to read data from the mailbox.

When processor A is writing, the output from gate G4 is set to logic 0, hence gate D1 does not drive the databus to the processor. Similarly, when processor B is writing, the outputs of gate G5 is logic level 0, so that line D2 does not drive the databus to processor B.

In theory, the facility exists for either processor to read the A to B full register 41 at any time. The processors may be prevented from accessing the register at particular times, by placing exception conditions within their respective programmes, thereby ensuring that deadlock conditions are avoided.

## Claims

1. Portable data processing apparatus comprising:
a first processor (22, 21) having an operational condition and a power-saving non active condition;
a second processor (21, 22) having an operational condition and a power-saving non-active condition;
data storage locations (33, 36) mutually accessible to the processors (21, 22) and wherein the first and second processors (21, 22) are arranged to transfer data between the first processor (22, 21) and the second processor (21, 22) via the data storage locations (33, 36);
a register (41) indicating whether said data storage locations (33, 36) have data stored therein to be read out or whether said locations are available for data to be written thereto;
interrupt generating means (42, F1, F2, G1) arranged to send an interrupt signal, under the initiation of the second processor (21, 22) to the first processor (22, 21) to change the condition of the first processor (22, 21) from the power-saving condition to the operational condition when said register (41) is set to indicate that said locations contain data to be read by said first processor (22, 21), the interrupt generating means (43, G2) being further arranged to supply an interrupt signal under the initiation of the first processor (22, 21) to the second processor (21, 22) to change the condition of the second processor (21, 22) from the power-saving condition to the operational condition when said register (41) is re-set to indicate that said locations have been read by the first processor;
and wherein said first and second processors (21, 22) are arranged to enter their respective power-saving conditions when not required to communicate with one another to transfer data there-between and arranged to be respectively interrupted from said power-saving conditions on receiving an appropriate interrupt signal.

2. Apparatus according to claim 1, wherein said storage locations include a first set of storage locations for storing data transferred from the first processor (22) to the second processor (21) and a second set of locations arranged to store data transferred from said second processor (21) to said first processor (22).

3. Apparatus according to claim 2, wherein each of said sets of storage locations has a respective register and respective interrupt generating means.

4. Apparatus according to any of claims 1 to 3, wherein said first processor (22) is battery (19) operated.

5. Apparatus according to claim 1, wherein the second processor is arranged to enter the power-saving condition when data storage locations have been read by the second processor.

6. Apparatus according to claim 1, wherein the first processor is arranged to enter the power-saving condition when data storage locations have been read by the first processor.

7. Apparatus according to claim 1, wherein the second processor is arranged to enter the power-saving condition when the data storage locations are full with data transmitted by the second processor.

8. Apparatus according to claim 1, wherein the first processor is arranged to enter the power-saving condition when the data storage locations are full with data transmitted by the first processor.

9. Apparatus according to claim 1, wherein said second processor (21, 22) is battery (19) operated.

10. Apparatus according to claim 1, wherein data is transferred in units of 68 bytes.

11. Apparatus according to claim 1, wherein said second processor (21, 22) is a signal processing unit.

12. Apparatus according to claim 1, wherein said first processor (22) is a micro controlling unit.

13. Apparatus as claimed in any preceding claim wherein the apparatus is a radiotelephone.

14. A method of conserving power in a data processing apparatus comprising:
transmitting data between a first processor (22, 21) and a second processor (21,22) via a data buffer (33, 36) and selectively switching on/off to a non-active standby condition the first processor (22, 21) and second processor to save power when not required to communicate with one another to transfer data there-between, the method further comprising interrupting, under the initiation of the second processor (21, 22), the first processor (22, 21) to change the condition of the first processor (22, 21) from the power-saving condition to a operational condition when the data buffer (33, 36) contains data to be read by the said first processor (22, 21); and interrupting the second processor (21, 22), under the initiation of the first processor (22, 21), from the power-saving condition to a operational condition when the data buffer (33, 36) data has been read and wherein the condition of the first/second processor is changed from respective operational conditions to respective power-saving conditions when respective second/first processors are not required to communicate with one another to transfer data therebetween.

## Patentansprüche

1. Tragbare Datenverarbeitungsvorrichtung mit:
einem ersten Prozessor (22, 21) mit einem Betriebszustand und einem nicht-aktiven Energiesparzustand;
einem zweiten Prozessor (21, 22) mit einem Betriebszustand und einem nicht-aktiven Energiesparzustand;
Datenspeicherstellen (33, 36), die gegenseitig für die Prozessoren (21, 22) zugänglich sind, und wobei der erste und der zweite Prozessor (21, 22) eingerichtet sind, Daten zwischen dem ersten Prozessor (22, 21) und dem zweiten Prozessor (21, 22) über die Datenspeicherstellen (33, 36) zu übermitteln;
einem Register (41), das angibt, ob die Datenspeicherstellen (33, 36) in ihnen gespeicherte Daten aufweisen, die auszulesen sind, oder ob die Stellen für Daten verfugbar sind, die in sie zu schreiben sind;
einer Unterbrechungserzeugungseinrichtung (42, F1, F2, G1), die eingerichtet ist, gemäß der Initiierung des zweiten Prozessors (21, 22) ein Unterbrechungssignal an den ersten Prozessor (22, 21) zu senden, um den Zustand des ersten Prozessors (22, 21) vom Energiesparzustand in den Betriebszustand zu wechseln, wenn das Register (41) gestzt ist, um anzugeben, dass die Stellen von dem ersten Prozessor (22, 21) zu lesende Daten enthalten, wobei die Unterbrechungserzeugungseinrichtung (43, G2) zusätzlich eingerichtet ist, gemäß der Initiierung des ersten Prozessors (22, 21) ein Unterbrechungssignal an den zweiten Prozessor (21, 22) zu liefern, um den Zustand des zweiten Prozessors (21, 22) vom Energiesparzustand in den Betriebszustand zu wechseln, wenn das Register (41) zurückgesetzt ist, um anzugeben, dass die Stellen von dem ersten Prozessor gelesen wurden;
und wobei der erste und der zweite Prozessor (21, 22) eingerichtet sind, in ihre jeweiligen Energiesparzustände einzutreten, wenn es nicht erforderlich ist, zum Übermitteln von Daten zwischen ihnen miteinander zu kommunizieren, und eingerichtet sind, bei Empfang eines entsprechenden Unterbrechungssignals jeweils aus den Energiesparzuständen unterbrochen zu werden.

2. Vorrichtung gemäß Anspruch 1, bei der die Speicherstellen eine erste Menge von Speicherstellen zum Speichern von Daten, die von dem ersten Prozessor (22) an den zweiten Prozessor (21) übermittelt werden, und eine zweite Menge von Stellen umfassen, die eingerichtet sind, von dem zweiten Prozessor (21) an den ersten Prozessor (22) übermittelte Daten zu speichern.

3. Vorrichtung gemäß Anspruch 2, bei der jede der Mengen von Speicherstellen ein jeweiliges Register und eine jeweilige Unterbrechungserzeugungseinrichtung aufweist.

4. Vorrichtung gemäß einem der Ansprüche 1 bis 3, bei der der erste Prozessor (22) von einer Batterie (19) betrieben wird.

5. Vorrichtung gemäß Anspruch 1, bei der der zweite Prozessor eingerichtet ist, in den Energiesparzustand einzutreten, wenn Datenspeicherstellen von dem zweiten Prozessor gelesen wurden.

6. Vorrichtung gemäß Anspruch 1, bei der der erste Prozessor eingerichtet ist, in den Energiesparzustand einzutreten, wenn Datenspeicherstellen von dem ersten Prozessor gelesen wurden.

7. Vorrichtung gemäß Anspruch 1, bei der der zweite Prozessor eingerichtet ist, in den Energiesparzustand einzutreten, wenn die Datenspeicherstellen mit Daten voll sind, die von dem zweiten Prozessor übertragen werden.

8. Vorrichtung gemäß Anspruch 1, bei der der erste Prozessor eingerichtet ist, in den Energiesparzustand einzutreten, wenn die Datenspeicherstellen mit Daten voll sind, die von dem ersten Prozessor übertragen werden.

9. Vorrichtung gemäß Anspruch 1, bei der der zweite Prozessor (21, 22) von einer Batterie (19) betrieben wird.

10. Vorrichtung gemäß Anspruch 1, bei der Daten in Einheiten von 68 Bytes übermittelt werden.

11. Vorrichtung gemäß Anspruch 1, bei der der zweite Prozessor (21, 22) eine Signalverarbeitungseinheit ist.

12. Vorrichtung gemäß Anspruch 1, bei der der erste Prozessor (22) eine Mikrosteuereinheit ist.

13. Vorrichtung gemäß einem der vorhergehenden Anspruche, wobei die Vorrichtung ein Funktelefon ist.

14. Verfahren zum Einsparen von Energie bei einer Datenverarbeitungsvorrichtung, mit den Schritten:
Übertragen von Daten zwischen einem ersten Prozessor (22, 21) und einem zweiten Prozessor (21, 22) über einen Datenpuffer (33, 36) und selektives Ein-/Ausschalten des ersten Prozessors (22, 21) und des zweiten Prozessors in/aus einen/einem nicht-aktiven Bereitschaftszustand, um Energie zu sparen, wenn es nicht erforderlich ist, zum Übermitteln von Daten zwischen diesen miteinander zu kommunizieren, wobei das Verfahren zusätzlich ein Unterbrechen des ersten Prozessors (22, 21) gemäß der Initiierung des zweiten Prozessors (21, 22) aufweist, um den Zustand des ersten Prozessors (22, 21) von dem Energiesparzustand in einen Betriebszustand zu wechseln, wenn der Datenpuffer (33, 36) von dem ersten Prozessor (22, 21) zu lesende Daten enthält; sowie ein Unterbrechen des zweiten Prozessors (21, 22) gemäß der Initiierung des ersten Prozessors (22, 21) von dem Energiesparzustand in einen Betriebszustand aufweist, wenn die Datenpuffer-(33, 36) Daten gelesen wurden, und wobei der Zustand des ersten/zweiten Prozessors von jeweiligen Betriebszuständen in jeweilige Energiesparzustande gewechselt wird, wenn es nicht erforderlich ist, dass jeweilige zweite/erste Prozessoren zum Übermitteln von Daten zwischen diesen miteinander kommunizieren.

## Revendications

1. Appareil portable de traitement de données comprenant :
un premier processeur (22, 21) disposant d'une condition opérationnelle et d'une condition non active d'économie de l'énergie ;
un deuxième processeur (21, 22) disposant d'une condition opérationnelle et d'une condition non active d'économie de l'énergie ;
des emplacements (33, 36) de mémorisation de données mutuellement accessibles aux processeurs (21, 22) et dans lesquels les premier et deuxième processeurs sont disposés de manière à transférer des données entre le premier processeur (22, 21) et le deuxième processeur (21, 22) par l'intermédiaire des emplacements (33, 36) de mémorisation de données ;
un registre (41) indiquant si lesdits emplacements (33, 36) de mémorisation de données possèdent des données qui y sont mémorisées afin d'être lues ou si lesdits emplacements sont disponibles pour que des données y soient écrites ;
un moyen de génération d'interruption (42, F1, F2, G1) disposé de manière à adresser un signal d'interruption, par commande par le deuxième processeur (21, 22) vers le premier processeur (22, 21), destiné à faire passer la condition du premier processeur (22, 21) de la condition d'économie de l'énergie à la condition opérationnelle quand ledit registre (41) est disposé d'une manière telle qu'il indique que lesdits emplacements renferment des données qui doivent être lues par ledit premier processeur (22, 21), le moyen de génération d'interruption ((43, G2) étant en outre disposé de façon à délivrer un signal d'interruption, par commande par le premier processeur (22, 21) vers le deuxième processeur (21, 22), destiné à faire passer la condition du deuxième processeur (21, 22) de la condition d'économie de l'énergie à la condition opérationnelle quand ledit registre (41) est réinitialisé de façon telle qu'il indique que lesdits emplacements ont été lus par le premier processeur ;
et dans lequel lesdits premier et deuxième processeurs (21, 22) sont disposés de manière à passer dans leurs conditions respectives d'économie de l'énergie quand il n'est pas nécessaire qu'ils communiquent l'un avec l'autre pour transférer des données entre eux et disposés de manière à voir leurs conditions d'économie de l'énergie respectivement interrompues à la réception d'un signal d'interruption approprié.

2. Appareil selon la revendication 1, dans lequel lesdits emplacements de mémorisation comprennent un premier ensemble d'emplacements de mémorisation destinés à mémoriser les données transférées du premier processeur (22) au deuxième processeur (21) et un deuxième ensemble d'emplacements destinés à mémoriser les données transférées dudit deuxième processeur (21) audit premier processeur (22).

3. Appareil selon la revendication 2, dans lequel chacun desdits emplacements de mémorisation comporte un registre respectif et un moyen respectif de génération d'interruption.

4. Appareil selon l'une quelconque des revendications 1 à 3, dans lequel le premier processeur (22) est alimenté par une batterie (19).

5. Appareil selon la revendication 1, dans lequel le deuxième processeur est disposé de manière à passer dans la condition d'économie de l'énergie quand les emplacements de mémorisation ont été lus par le deuxième processeur.

6. Appareil selon la revendication 1, dans lequel le premier processeur est disposé de manière à passer dans la condition d'économie de l'énergie quand les emplacements de mémorisation ont été lus par le premier processeur.

7. Appareil selon la revendication 1, dans lequel le deuxième processeur est disposé de manière à passer dans la condition d'économie de l'énergie quand les emplacements de mémorisation sont remplis par des données transmises par le deuxième processeur.

8. Appareil selon la revendication 1, dans lequel le premier processeur est disposé de manière à passer dans la condition d'économie de l'énergie quand les emplacements de mémorisation sont remplis par des données transmises par le premier processeur.

9. Appareil selon la revendication 1, dans lequel ledit deuxième processeur (21, 22) est alimenté par une batterie (19).

10. Appareil selon la revendication 1, dans lequel les données sont transférées dans des unités de 68 multiplets.

11. Appareil selon la revendication 1, dans lequel ledit deuxième processeur (21, 22) est une unité de traitement de signal.

12. Appareil selon la revendication 1, dans lequel ledit premier processeur (22) est une unité de micro-commande.

13. Appareil selon l'une quelconque des revendications précédentes, dans lequel l'appareil est un radiotéléphone.

14. Procédé de conservation de l'énergie dans un appareil de traitement de données, comprenant les étapes consistant à :
transmettre des données entre un premier processeur (22, 21) et un deuxième processeur (21, 22) par l'intermédiaire d'une mémoire tampon (33, 36) de données et commuter de manière sélective par marche/arrêt sur une condition non active d'attente le premier processeur (22, 21) et le deuxième processeur de façon à économiser l'énergie quand il n'est pas nécessaire qu'ils communiquent l'un avec l'autre pour transférer des données entre eux, le procédé comprenant en outre une étape d'interruption, par commande du deuxième processeur (21, 22) vers le premier processeur (22, 21), destinée à faire passer la condition du premier processeur (22, 21) de la condition d'économie de l'énergie à une condition opérationnelle quand la mémoire tampon (33, 36) de données renferme des données qui doivent être lues par ledit premier processeur (22, 21) ; et d'interruption du deuxième processeur, par commande par le premier processeur (22, 21), destinée à faire passer de la condition d'économie de l'énergie à une condition opérationnelle quand les données de la mémoire tampon (33, 36) de données ont été lues et dans lequel on fait passer la condition du premier/deuxième processeur des conditions opérationnelles respectives aux conditions respectives d'économie de l'énergie quand il n'est pas nécessaire que ceux-ci communiquent l'un avec l'autre pour transférer des données entre eux.
